# EUROPEAN PATENT SPECIFICATION

(11) **EP 3 949 416 B1**
(45) Date of publication and mention of the grant of the patent: **28.10.2026**
(21) Application number: 20719098.4
(22) Date of filing: 26.03.2020
(51) Int. Cl.: H04N 19/513, H04N 19/44, H04N 19/136, H04N 19/176, H04N 19/109

(54) **METHODS AND APPARATUS FOR PREDICTION REFINEMENT FOR DECODER SIDE MOTION VECTOR REFINEMENT WITH OPTICAL FLOW**
VERFAHREN UND VORRICHTUNG ZUR VERFEINERUNG DER PRÄDIKTION MIT OPTISCHEM FLUSS
PROCÉDÉS ET APPAREILS POUR L'AFFINEMENT DE PRÉDICTION DESTINÉ À L'AFFINEMENT DE VECTEURS DE MOUVEMENT CÔTÉ DÉCODEUR PAR FLUX OPTIQUE

(30) Priority: 26.03.2019 US 201962823935 P
(43) Date of publication of application: 09.02.2022
(73) Proprietor: InterDigital VC Holdings, Inc., Wilmington, DE 19809 (US)
(72) Inventor: CHEN, Wei, San Diego, California 92122 (US); HE, Yuwen, San Diego, California 92130 (US); LUO, Jiancong, Skillman, New Jersey 08558 (US)
(74) Representative: Vossius & Partner Patentanwälte Rechtsanwälte mbB
(86) International application number: PCT/US2020/024996
(87) International publication number: WO 2020/198497

(56) References cited:
- CHEN (INTERDIGITAL) W ET AL: "Non-CE9: Block Boundary Prediction Refinement with Optical Flow for DMVR", no. m48720, 26 June 2019 (2019-06-26), XP030222192, Retrieved from the Internet <URL:http://phenix.int-evry.fr/mpeg/doc_end_user/documents/127_Gothenburg/wg11/m48720-JVET-O0581-v1-JVET-O0581-v1.zip JVET-O0581-v1/JVET-O0581-v1.DOCX> [retrieved on 20190626]
- "Test Model 4 of Versatile Video Coding (VTM 3)", no. n18275, 24 March 2019 (2019-03-24), XP030212829, Retrieved from the Internet <URL:http://phenix.int-evry.fr/mpeg/doc_end_user/documents/125_Marrakech/wg11/w18275-v2-w18275.zip w18275.docx> [retrieved on 20190324]
- LUO (INTERDIGITAL) J ET AL: "CE2-related: Prediction refinement with optical flow for affine mode", no. JVET-N0236, 20 March 2019 (2019-03-20), XP030203893, Retrieved from the Internet <URL:http://phenix.int-evry.fr/jvet/doc_end_user/documents/14_Geneva/wg11/JVET-N0236-v4.zip JVET-N0236-r1.docx> [retrieved on 20190320]
- CHEN H ET AL: "Description of SDR, HDR and 360° video coding technology proposal by Huawei, GoPro, HiSilicon, and Samsung "" general application scenario", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0025, 3 April 2018 (2018-04-03), XP030151191
- LUO J ET AL: "CE4-2.1: Prediction refinement with optical flow for affine mode", no. JVET-O0070, 26 June 2019 (2019-06-26), XP030218579, Retrieved from the Internet <URL:http://phenix.int-evry.fr/jvet/doc_end_user/documents/15_Gothenburg/wg11/JVET-O0070-v2.zip JVET-O0070.docx> [retrieved on 20190626]

## Description

### BACKGROUND

Video coding systems are widely used to compress digital video signals to reduce the storage need and/or transmission bandwidth of such signals. Among the various types of video coding systems, such as block-based, wavelet-based, and object-based systems, block-based hybrid video coding systems are the most widely used and deployed currently. Examples of such block-based video coding systems include international video coding standards such as the MPEG-1/2/4 part 2, H.264/MPEG-4 part 10 AVC [1] [2], VC-1 [3] and the latest video coding standard called High Efficiency Video Coding (HEVC) [4], which was developed by JCT-VC (Joint Collaborative Team on Video Coding) of ITU-T/SG16/Q.6/VCEG and ISO/IEC/MPEG.

### BRIEF DESCRIPTION OF THE DRAWINGS

A more detailed understanding may be had from the Detailed Description below, given by way of example in conjunction with drawings appended hereto. Figures in such drawings, like the detailed description, are examples. As such, the Figures and the detailed description are not to be considered limiting, and other equally effective examples are possible and likely. Furthermore, like reference numerals in the Figures indicate like elements, and wherein:
FIG. 1 is a block diagram illustrating an example video encoder in which one or more embodiments may be carried out and/or implemented;
FIG. 2 is a block diagram illustrating an example video decoder for use with the video encoding and/or decoding system of FIG. 1 in which one or more embodiments may be carried out and/or implemented;
FIG. 3A is a diagram illustrating an affine motion field of a block described by two control point motion vectors, according to embodiments;
FIG. 3B is a diagram illustrating sub-block level motion derivation for affine blocks in 4 parameter affine mode based motion prediction, according to embodiments;
FIG. 4 is a diagram illustrating an exemplary model for 6 parameter affine mode based motion prediction, according to embodiments;
FIG. 5 is a diagram illustrating decoding side motion vector refinement, according to embodiments;
FIG. 6 is a diagram illustrating the difference between the pixel level motion vector and sub-block level motion vector, according to embodiments;
FIG. 7 is a diagram showing exemplary blocks in a coding unit for purposes of illustrating an embodiment;
FIG. 8A is a system diagram illustrating an example communications system in which one or more disclosed embodiments may be implemented;
FIG. 8B is a system diagram illustrating an example wireless transmit/receive unit (WTRU) that may be used within the communications system illustrated in FIG. 8A according to an embodiment;
FIG. 8C is a system diagram illustrating an example radio access network (RAN) and an example core network (CN) that may be used within the communications system illustrated in FIG. 8A according to an embodiment;
FIG. 8D is a system diagram illustrating a further example RAN and a further example CN that may be used within the communications system illustrated in FIG. 8A according to an embodiment; and
FIG. 9 is a system diagram illustrating a system implementing various aspects and operations according to embodiments.

### DETAILED DESCRIPTION

### Introduction

In July 2018, the Joint Video Expert Team (JVET) launched a new project to develop the new generation video coding standard, named Versatile Video Coding (WC) [6]. In the same month, one reference software codebase, called WC test model (VTM) [7], was established for demonstrating a reference implementation of the WC standard. For the initial VTM-1.0, most of the coding modules, including intra prediction, inter prediction, transform/inverse transform and quantization/de-quantization, and in-loop filters follow the existing HEVC design, with one key exception, namely, that one multi-type tree based block partitioning structure is used in the VTM. Meanwhile, to facilitate the assessment of new coding tools, another reference software base called benchmark set (BMS) [8] was also generated. In the BMS codebase, a list of coding tools inherited from the JEM [10], which provides higher coding efficiency and moderate implementation complexity, are included on top of the VTM and used as the benchmark when evaluating similar coding technologies during the WC standardization process. Specifically, there are 9 JEM coding tools integrated in the BMS-1.0, including 65 angular intra prediction directions, modified coefficient coding, advanced multiple transform (AMT) + 4x4 non-separable secondary transform (NSST), affine motion model, generalized adaptive loop filter (GALF), advanced temporal motion vector prediction (ATMVP), adaptive motion vector precision, decoder-side motion vector refinement (DMVR) and linear model (LM) chroma mode.

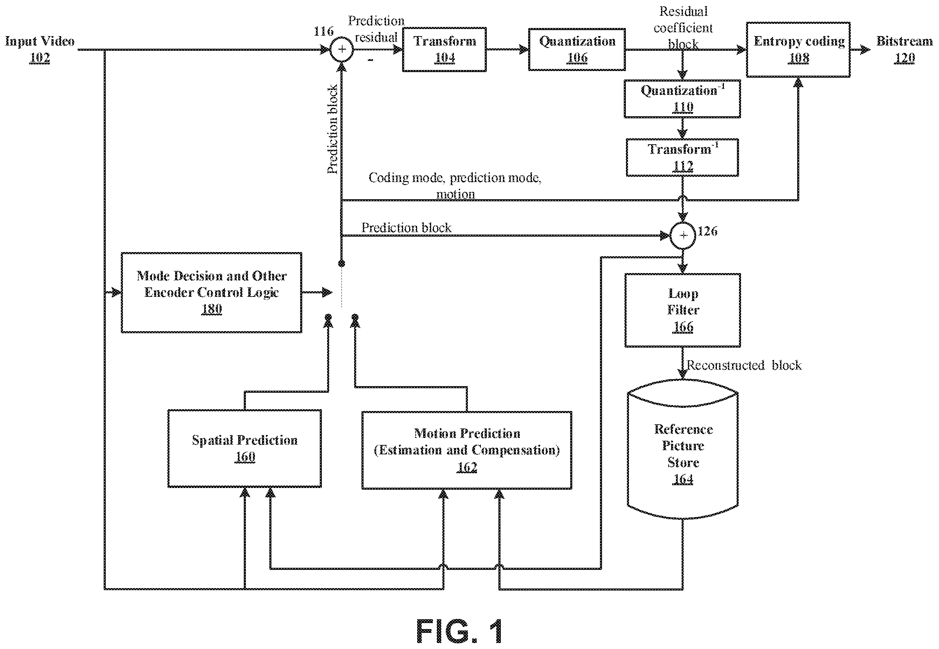

Like HEVC, the WC is built upon a block-based hybrid video coding framework. Figure 1 is a block diagram illustrating a generic block-based hybrid video encoding system. The input video signal 102 is processed block by block. In HEVC, extended block sizes (called a "coding unit" or CU) are used to efficiently compress high resolution (e.g., 1080p and beyond) video signals. In HEVC, a CU can be up to 64x64 pixels. A CU can be further partitioned into prediction units or PUs, for which separate prediction methods are applied. Referring to FIG. 1, which gives a general block diagram of a block-based video encoder, for each input video block (which may be a master block (MB) or CU), spatial prediction (160) and/or temporal prediction (162) may be performed. Spatial prediction (or "intra prediction") uses pixels from the already coded neighboring blocks in the same video picture/slice to predict the current video block. Spatial prediction reduces spatial redundancy inherent in the video signal. Temporal prediction (also referred to as "inter prediction" or "motion compensated prediction") uses pixels from the already coded video pictures to predict the current video block. Temporal prediction reduces temporal redundancy inherent in the video signal. Temporal prediction signals for a given video block are usually signaled by one or more motion vectors which indicate the amount and the direction of motion between the current block and its reference block. Also, if multiple reference pictures are supported (as is the case for many recent video coding standards such as H.264/AVC or HEVC), then, for each video block, its reference picture index is sent additionally; and the reference index is used to identify which reference picture in the reference picture store (164) the temporal prediction signal is based off of. After spatial and/or temporal prediction, the mode decision block (180) in the encoder chooses the best prediction mode, for example, based on the rate-distortion optimization method. The prediction block from either the spatial prediction 160 or temporal prediction 162 is then subtracted from the current video block (116); and the prediction residual is de-correlated using transform (104) and quantized (106) to achieve the target bit-rate. The quantized residual coefficients are inverse quantized (110) and inverse transformed (112) to form the reconstructed residual, which is then added back to the prediction block at 126 to form the reconstructed video block. Further in-loop filtering (166) such as de-blocking filter and Adaptive Loop Filters may be applied to the reconstructed video block before it is put in the reference picture store (164) for use in coding future video blocks. To form the output video bit-stream 120, coding mode (inter or intra), prediction mode information, motion information, and quantized residual coefficients are all sent to the entropy coding unit (108) to be further compressed and packed to form the bit-stream.

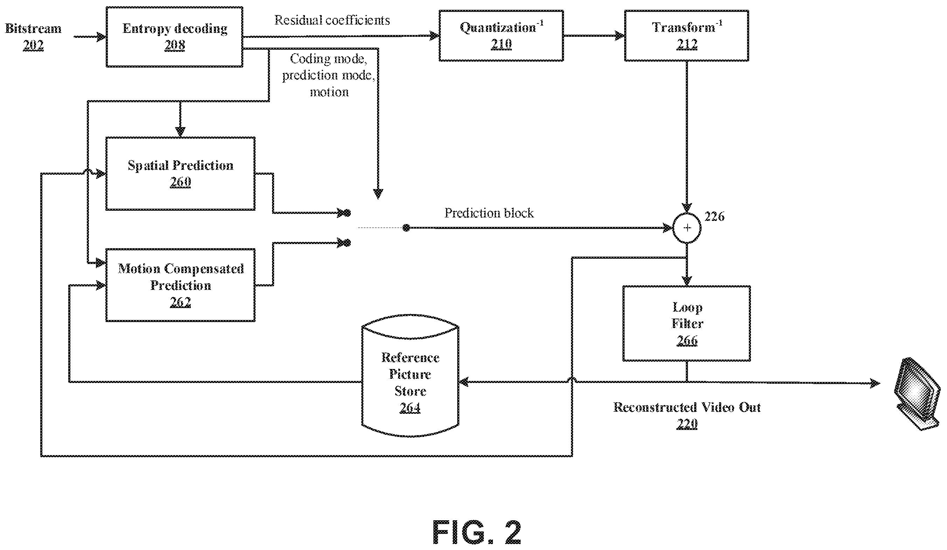

Figure 2 gives a general block diagram of a block-based video decoder. The video bit-stream 202 is first unpacked and entropy decoded at entropy decoding unit 208. The coding mode and the prediction information are sent to the spatial prediction unit 260 (for intra coding mode) and/or the temporal prediction unit 262 (for inter coding mode) for the appropriate one thereof to form the prediction block. The residual transform coefficients are sent to inverse quantization unit 210 and inverse transform unit 212 to reconstruct the residual block. The prediction block (from the spatial prediction 260, if intra coding mode, or from the temporal prediction 262, if inter coding mode) is then added to the residual block at 226. The reconstructed block may further go through in-loop filtering 266 before it is stored in reference picture store 264. The reconstructed video 220 also is sent out to drive a display device, in addition to being saved in the reference picture store for use in predicting future video blocks.

In modern video codecs, bi-directional motion compensated prediction (MCP) is known for its high efficiency in removing temporal redundancy by exploiting temporal correlations between pictures, and has been widely adopted in most of the state-of-the-art video codecs [2][9][10][7]. Still, the bi-prediction signal is formed simply by combining two uni-prediction signals using a weight value equal to 0.5. However, it is less than optimal to combine the uni-prediction signals in this simple manner, especially in conditions where illuminance changes rapidly from one reference picture to another. Thus, several prediction techniques aimed at compensating the illuminance variation over time by applying some global or local weights and offset values to each of the sample values in reference pictures have been developed. Some of those techniques are discussed below.

### Affine mode

In HEVC, only a translational motion model is applied for motion compensated prediction, whereas, in the real world, there are many kinds of motion, e.g. zoom in/out, rotation, perspective motions, and other irregular motions. In the VTM-2.0 [7], an affine motion compensated prediction is applied. The affine motion model is either 4-parameter or 6-parameter. The first flag for each inter coded CU is signaled to indicate whether the translation motion model or the affine motion model is applied for inter prediction. If it is affine motion model, a second flag is sent to indicate whether it is 4-parameter or 6-parameter model.

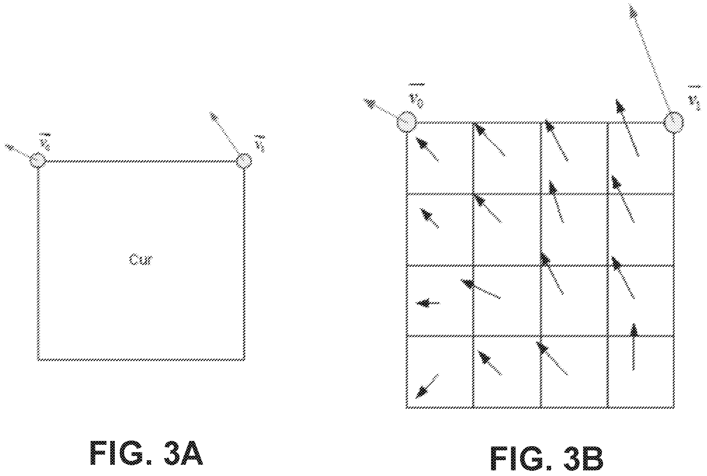

The affine motion model with four-parameters has the following parameters: two parameters for translation movement in horizontal and vertical directions, one parameter for zoom motion for both directions, and one parameter for rotation motion for both directions. The horizontal zoom parameter is equal to the vertical zoom parameter. The horizontal rotation parameter is equal to the vertical rotation parameter. This four-parameter affine motion model is coded in VTM using two motion vectors at two control point positions defined at the top-left corner and the top-right corner of the current CU. As shown in FIG. 3A, the affine motion field of the block is described by two control point motion vectors (V₀, V₁). Based on the control point motion, the motion field (*vₓ, v_{y}*) of one affine coded block is described as $\begin{matrix}{ν}_{x} = \frac{\left({ν}_{1 x}-{ν}_{0 x}\right)}{w} x - \frac{\left({ν}_{1 y}-{ν}_{0 y}\right)}{w} y + {ν}_{0 x} \\ {ν}_{y} = \frac{\left({ν}_{1 y}-{ν}_{0 y}\right)}{w} x + \frac{\left({ν}_{1 x}-{ν}_{0 x}\right)}{w} y + {ν}_{0 y}\end{matrix}$ (1)

Where (*v₀ₓ, v_{0y}*) is the motion vector of the top-left corner control point, and (*v₁ₓ, v_{1y}*) is motion vector of the top-right corner control point, as shown in FIG. 3A, and *w* is the width of the CU. In VTM-2.0, the motion field of an affine coded CU is derived at the 4x4 block level; that is, (*vₓ, v_{y}*) is derived for each of the 4x4 blocks within the current CU and applied to the corresponding 4x4 block. FIG. 3B illustrates motion derivation for affine blocks in 4 parameter affine motion prediction at, for instance, the 4x4 block level.

Those four parameters of 4-parameter affine model are estimated iteratively. Denote the motion vector (MV) pairs at step k as $\left\{\left({v}_{0 x}^{k}, {v}_{0 y}^{k}\right), \left({v}_{1 x}^{k}, {v}_{1 y}^{k}\right)\right\}$*,* the original luminance signal as *I*(*i, j*)*,* and the prediction luminance signal as *I'ₖ*(*i, j*). The spatial gradient *gₓ*(*i, j*) and *g_{y}*(*i, j*) are derived with a Sobel filter [13] applied on the prediction signal *I'ₖ*(*i, j*) in the horizontal and vertical directions, respectively. The derivative of Eq (1) can be represented as: $\left\{\begin{matrix}{dv}_{x}^{k} \left(x, y\right) = c ∗ x - d ∗ y + a \\ {dv}_{y}^{k} \left(x, y\right) = d ∗ x + c ∗ y + b\end{matrix}\right.$ (2) where (a, b) are delta translational parameters and (c, d) are delta zoom and rotation parameters at step k. The delta MV at a control point can be derived with its coordinates using Eqs. (3) and (4). For example, (0, 0), (*w,* 0) are coordinates for top-left and top-right control points, respectively. $\left\{\begin{matrix}{dv}_{0 x}^{k} = {v}_{0 x}^{k + 1} - {v}_{0 x}^{k} = a \\ {dv}_{0 y}^{k} = {v}_{0 y}^{k + 1} - {v}_{0 y}^{k} = b\end{matrix}\right.$ (3) $\left\{\begin{matrix}{dv}_{1 x}^{k} = \left({v}_{1 x}^{k + 1}-{v}_{1 x}^{k}\right) = c ∗ w + a \\ {dv}_{1 y}^{k} = \left({v}_{1 y}^{k + 1}-{v}_{1 y}^{k}\right) = d ∗ w + b\end{matrix}\right.$ (4)

Based on the optical flow equation, the relationship between the change of luminance and the spatial gradient and temporal movement is formulated as: $I {′}_{k} \left(i, j\right) - I \left(i, j\right) = {g}_{x} \left(i, j\right) ∗ {dv}_{x}^{k} \left(i, j\right) + {g}_{y} \left(i, j\right) ∗ {dv}_{y}^{k} \left(i, j\right)$ (5)

Substituting ${dv}_{x}^{k} \left(i, j\right)$ and ${dv}_{y}^{k} \left(i, j\right)$ with Eq. (2), we get the equation for parameter (a, b, c, d). 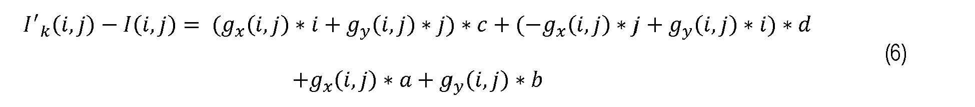 I'k(i, j) - I(i,j) = (gx(i, j) * i + gy(i, j) * j) * c + (-gx(i, j) * j + gy(i, j) * i) * d +gx(i, j) * a + gy(i, j) * b (6)

Since all samples in the CU satisfy the Eq. (6), the parameter set (a, b, c, d) can be solved using a least square error method. The MVs at two control points $\left\{\left({v}_{0 x}^{k + 1}, {v}_{0 y}^{k + 1}\right), \left({v}_{1 x}^{k + 1}, {v}_{1 y}^{k + 1}\right)\right\}$ at step (k+1) can be solved with Eq. (3) and (4), and they may be rounded to a specific precision (i.e. 1/4 pel). Using the iteration, the MVs at two control points can be refined until it converges when parameters (a, b, c, d) are all zeros or the iteration time meets a pre-defined limit.

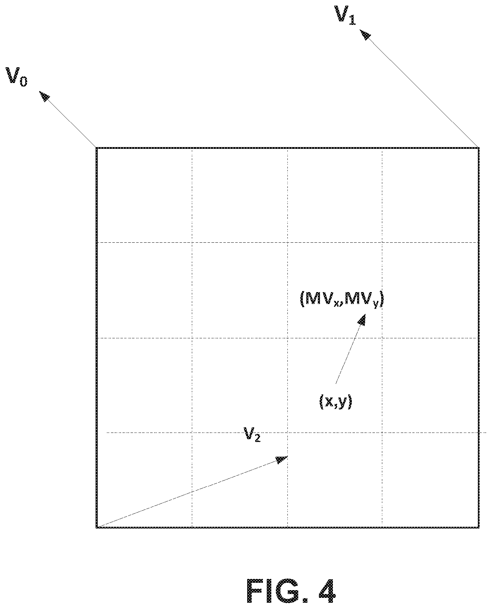

The affine motion model with 6-parameter has the following parameters: two parameters for translation movement in horizontal and vertical directions, one parameter for zoom motion and one parameter for rotation motion in the horizontal direction, and one parameter for zoom motion and one parameter for rotation motion in the vertical direction. The 6-parameter affine motion model is coded with three MVs at three control points. As shown in FIG. 4, three control points for 6-parameter affine coded CU are defined at the top-left, top-right and bottom left corners of the CU. The motion at the top-left control point is related to translation motion, and the motion at the top-right control point is related to rotation and zoom motion in the horizontal direction, and the motion at the bottom-left control point is related to rotation and zoom motion in the vertical direction. For the 6-parameter affine motion model, the rotation and zoom motion in horizontal direction may not be the same as those motions in the vertical direction. The motion vector of each sub-block (*vₓ, v_{y}*) is derived using three MVs at the control points as: $\begin{matrix}{v}_{x} = {v}_{0 x} + \left({v}_{1 x}-{v}_{0 x}\right) ∗ \frac{x}{w} + \left({v}_{2 x}-{v}_{0 x}\right) ∗ \frac{y}{h} \\ {v}_{y} = {v}_{0 y} + \left({v}_{1 y}-{v}_{0 y}\right) ∗ \frac{x}{w} + \left({v}_{2 y}-{v}_{0 y}\right) ∗ \frac{y}{h}\end{matrix}$ (7) where *(v₂ₓ, v_{2y})* is the motion vector of the bottom-left control point, (*x, y*) is the center position of the sub-block, and *w* and h are the width and height of the CU.

The six parameters of the 6-parameter affine model are estimated in a similar way to that described above in connection with the 4 parameter affine motion model. Eq. (2) is changed as follows. $\left\{\begin{matrix}{dv}_{x}^{k} \left(x, y\right) = c ∗ x + d ∗ y + a \\ {dv}_{y}^{k} \left(x, y\right) = e ∗ x + f ∗ y + b\end{matrix}\right.$ (8) where (a, b) are delta translation parameters, (c, d) are delta zoom and rotation parameters for the horizontal direction, and (e, f) are delta zoom and rotation parameters for the vertical direction, at step k. Equation (8) also is changed accordingly, as shown below in Eq. (9). 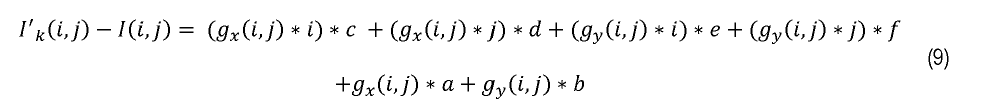 I'k(i, j) - I(i, j) = (gx(i, j) * i) * c + (gx(i, j) * j) * d + (gy(i, j) * i) * e + (gy(i, j) * j) * f +gx(i, j) * a + gy(i, j) * b (9)

The parameter set (a, b, c, d, e, f) can be solved using a least square method by considering all samples within the CU. The MV of the top-left control point ( ${v}_{0 x}^{k + 1} , {v}_{0 y}^{k + 1}$) is calculated using Eq. (3). The MV of the top-right control point ( ${v}_{1 x}^{k + 1} , {v}_{1 y}^{k + 1}$) is calculated using Eq. (10) below. The MV of the top-right control point ( ${v}_{2 x}^{k + 1} , {v}_{2 y}^{k + 1}$) is calculated using Eq. 11. $\left\{\begin{matrix}d {v}_{1 x}^{k} = \left({v}_{1 x}^{k + 1}-{v}_{1 x}^{k}\right) = c ∗ w + a \\ d {v}_{1 y}^{k} = \left({v}_{1 y}^{k + 1}-{v}_{1 y}^{k}\right) = e ∗ w + b\end{matrix}\right.$ (10) $\left\{\begin{matrix}d {v}_{2 x}^{k} = \left({v}_{2 x}^{k + 1}-{v}_{2 x}^{k}\right) = d ∗ h + a \\ d {v}_{2 y}^{k} = \left({v}_{2 y}^{k + 1}-{v}_{2 y}^{k}\right) = f ∗ h + b\end{matrix}\right.$ (11)

### Decoder side motion vector refinement (DMVR)

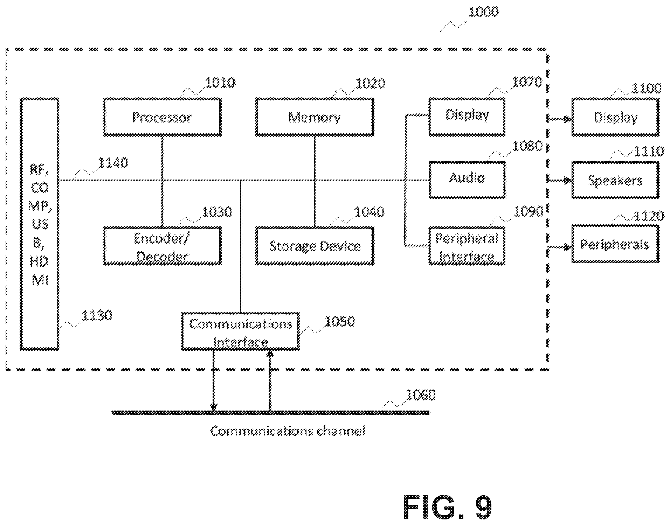

In order to increase the accuracy of the MVs of the merge mode, a bilateral-matching (BM) based decoder side motion vector refinement is applied in VTM4 [11]. In bi-prediction operation, a refined MV is searched around the initial MVs in the reference picture list L0 and reference picture list L1. The BM method calculates the distortion between the two candidate blocks in the reference picture list L0 and list L1. As illustrated in Figure 9, the sum of absolute difference (SAD) between the red blocks based on each MV candidate around the initial MV is calculated. The MV candidate with the lowest SAD becomes the refined MV and used to generate the bi-predicted signal.

The refined MV derived by the DMVR process is used to generate the inter prediction samples and also used in temporal motion vector prediction for future pictures coding. While the original MV is used in the deblocking process and also used in spatial motion vector prediction for future CU coding.

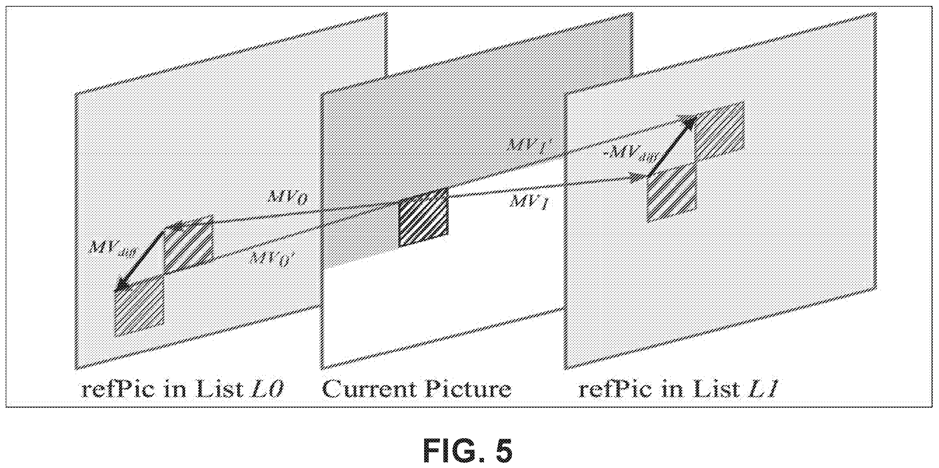

As shown in FIG. 5, the search points surrounding the initial MV and the MV offset obey the MV difference mirroring (i.e. symmetric) rule. In other words, any points that are checked by DMVR, denoted by candidate MV pair (MV0, MV1), obey the following two equations: $\left\{\begin{matrix}MV 0 ′ & = MV 0 + {MV}_{offset} \\ MV 1 ′ & = MV 1 - {MV}_{offset}\end{matrix}\right.$ (12)

Where *MV_{offset}* represents the refinement offset between the initial MV and the refined MV in one of the reference pictures. In VTM4, the refinement search range is two integer luma samples from the initial MV. To reduce the search complexity, a fast searching method with early termination mechanism may be applied.

### Prediction refinement with optical flow for affine mode (PROF)

To achieve a finer granularity of motion compensation, the standard contribution "CE2-related: Prediction refinement with optical flow for affine mode", JVET-N0236, 20 March 2019 by Lou et al proposes a method to refine the sub-block based affine motion compensated prediction with optical flow termed Prediction Refinement with Optical Flow (PROF).

After the sub-block based affine motion compensation is performed, the luma prediction sample is refined by adding a difference derived by the optical flow equation. The proposed PROF is described as following four steps.

Step 1: The sub-block-based affine motion compensation is performed to generate sub-block prediction *I*(*i, j*)*.*

Step2: The spatial gradients, *gₓ*(*i, j*) and *g_{y}*(*i, j*)*,* of the sub-block prediction are calculated at each sample location using a 3-tap filter [-1, 0, 1]. ${g}_{x} \left(i, j\right) = I \left(i+1,j\right) - I \left(i-1,j\right)$ ${g}_{y} \left(i, j\right) = I \left(i,j+1\right) - I \left(i,j-1\right)$

The sub-block prediction is extended by one pixel on each side for the gradient calculation. To reduce the memory bandwidth and complexity, the pixels on the extended borders are copied from the nearest integer pixel position in the reference picture. Therefore, additional interpolation for padding region is avoided.

Step 3: The luma prediction refinement is calculated by the optical flow equation. $Δ I \left(i, j\right) = {g}_{x} \left(i, j\right) ∗ Δ {v}_{x} \left(i, j\right) + {g}_{y} \left(i, j\right) ∗ Δ {v}_{y} \left(i, j\right)$ (13) where Δ*vₓ*(*i, j*) is the difference between the pixel MV computed for sample pixel location *(i,j),* denoted by *v*(*i,j*), and the sub-block MV of the sub-block to which pixel (*i,j*) belongs in the horizontal direction and Δ*v_{y}*(*i, j*) is the difference between the pixel MV computed for sample pixel location (*i,j*), denoted by *v*(*i,j*)*,* and the sub-block MV of the sub-block to which pixel (*i,j*) belongs in the vertical direction.

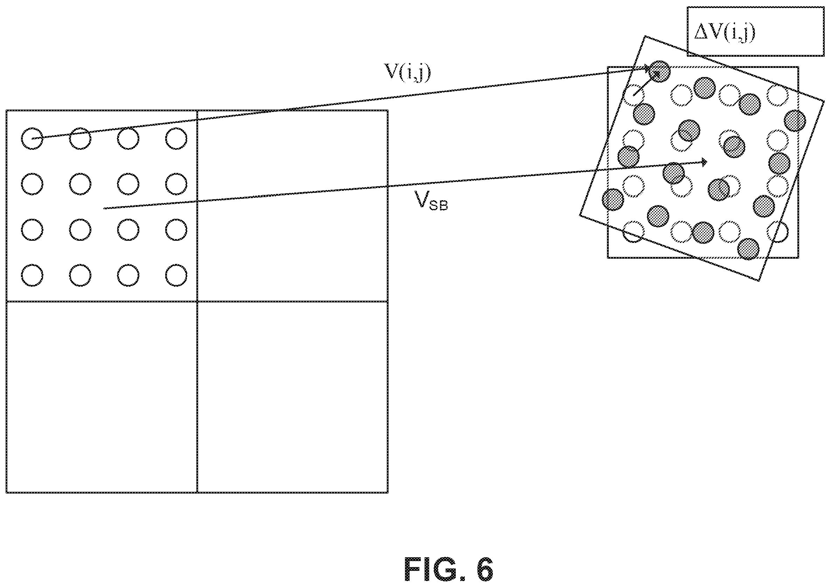

FIG. 6 helps illustrate how each individual pixel's MV may differ from the sub-block MV.

Since the affine model parameters and the pixel location relative to the sub-block center are not changed from sub-block to sub-block, Δ*v*(*i, j*) can be calculated for the first sub-block, and reused for other sub-blocks in the same CU. Let *x* and *y* be the horizontal and vertical offset from the pixel location to the center of the sub-block, Δ*v*(*x, y*) can be derived by the following equation, $\left\{\begin{matrix}Δ {v}_{x} \left(x, y\right) = c ∗ x + d ∗ y \\ Δ {v}_{y} \left(x, y\right) = e ∗ x + f ∗ y\end{matrix}\right.$

For 4-parameter affine model, $\left\{\begin{matrix}c = f = \frac{{v}_{1 x} - {v}_{0 x}}{w} \\ e = - d = \frac{{v}_{1 y} - {v}_{0 y}}{w}\end{matrix}\right.$

For 6-parameter affine model, $\left\{\begin{matrix}c = \frac{{v}_{1 x} - {v}_{0 x}}{w} \\ d = \frac{{v}_{2 x} - {v}_{0 x}}{h} \\ e = \frac{{v}_{1 y} - {v}_{0 y}}{w} \\ f = \frac{{v}_{2 y} - {v}_{0 y}}{h}\end{matrix}\right.$ where (*v*₀*ₓ, v*_{0*y*})*,* (*v*₁*ₓ, v*_{1*y*})*,* (*v*₂*ₓ, v*_{2*y*}) are the top-left, top-right and bottom-left control point motion vectors, w and h are the width and height of the CU.

Step 4: Finally, the luma prediction refinement is added to the sub-block prediction *I*(*i, j*)*.* The final prediction *I*' is generated using the following equation. $I ′ \left(i, j\right) = I \left(i, j\right) + Δ I \left(i, j\right)$ (14)

### Motion vector refinement based prediction refinement with optical flow

Following is a method to improve motion vector refinement based sub-block level motion compensated prediction. After the refined motion vector (RMV) is derived by DMVR process and sub-block based motion compensation is performed according to the RMV, pixel intensity is refined by adding a difference value derived by the optical flow equation (Eq. (13)), which is referred to herein as motion vector refinement based prediction refinement with optical flow (MVRPROF). The MVRPROF technique can achieve pixel level granularity without significantly increasing complexity and also keeps the worst-case memory access bandwidth comparable to regular DMVR based sub-block level motion compensation.

In this invention, MVPROF is proposed to improve the granularity of DMVR based sub-block level motion compensated prediction by applying a change in pixel intensity derived from the optical flow equation. This method requires only one motion compensation operation per sub-block, which is the same as the existing affine motion compensation in WC. In accordance with an exemplary embodiment, in a first step, a refined motion vector for each sub-block in the CU is derived by performing a DMVR process, such as described in section 1.2 above. This may be followed by sub-block based motion compensation such as described in section 1.1 above to generate sub-block based prediction.

In a second step, the spatial gradients *gₓ*(*i, j*) and *g_{y}*(*i, j*) of the sub-block prediction are calculated at each sample location by following the process described in section 1.3.

In a third step, motion vector offset Δ*v*(*i, j*) is calculated at each sample location by following the process described below:

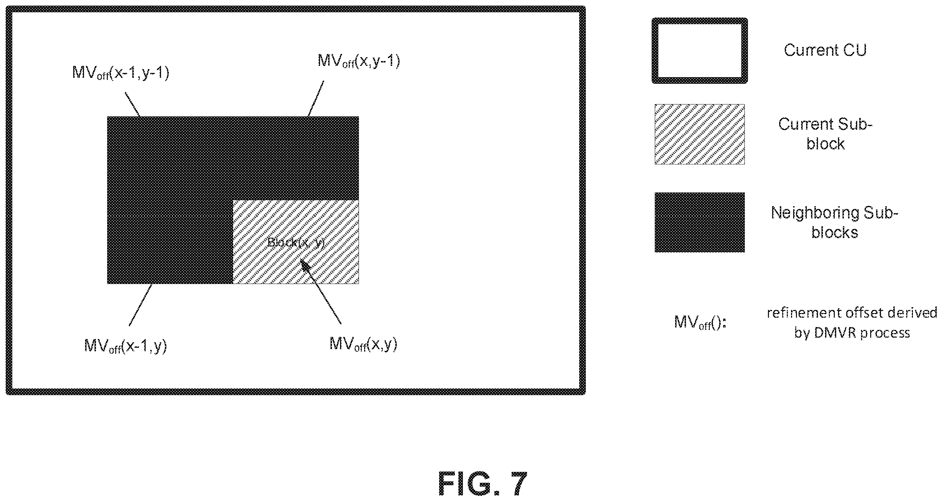

As shown in FIG. 7, there are multiple motion vector offsets available within the current CU. For each sub-block (e.g., the current sub-block in FIG. 7) within a CU (other than sub-blocks located at the left and/or top boundaries of the current CU), there are three neighboring sub-blocks for which their MV offset value is available after DMVR processing. Considering the 4 MV offsets for the 4 sub-blocks respectively as shown in FIG. 7, motion of each sub-block may be represented by a 6-parameter motion model as below: $\left[\begin{matrix}{MV}_{X _ offset} \\ {MV}_{Y _ offset}\end{matrix}\right] = \left[\begin{matrix}{a}_{xx} & {a}_{xy} \\ {a}_{yx} & {a}_{yy}\end{matrix}\right] \left[\begin{matrix}{X}_{sub _ block} \\ {Y}_{sub _ block}\end{matrix}\right] + \left[\begin{matrix}{b}_{x} \\ {b}_{y}\end{matrix}\right]$ (15) where *MV*_{*X*_*offset*} and *MV*_{*Y*_*offset*} are the horizontal and vertical component of one MV offset, and *X_{sub_block}* and *Y_{sub_block}* are the X and Y coordinate of the center location of the corresponding sub-block. Based on the known MV offsets and center location of each of the four adjacent sub-blocks (i.e., the current sub-block and the three aforementioned neighboring sub-blocks), the parameters *aₓₓ, a_{xy}, a_{yx}, a_{yy}, bₓ* and *b_{y}* can be calculated by linear regression modelling of Eq. (15) for all four sub-blocks (8 total equations).

In one embodiment, MV offsets and center locations of the three neighboring sub-blocks may be used to calculate the 6 parameters, while the fourth (the current) sub-block may be used to estimate and evaluate the model error. In an embodiment, if the model error is larger than a pre-defined threshold, the MVPROF may not be applied to the current sub-block (i.e. the fourth sub-block).

In another embodiment, all four of the sub-blocks may be used to calculate the 6 parameters.

Given the affine motion model defined in Eq. (15) and model parameters calculated as described above, the motion vector offset Δ*v*(*i, j*) at each sample location belonging to one sub-block can be calculated by: $\begin{matrix}Δ {v}_{x} \left(i, j\right) = {a}_{xx} i + {a}_{xy} j + {b}_{x} \\ Δ {v}_{y} \left(i, j\right) = {a}_{yx} i + {a}_{yy} j + {b}_{y}\end{matrix}$ (16) where *i* and *j* are the X and Y coordinate, respectively, of each sample/pixel.

In some cases, a 4-parameter affine model may fit the motion better than a 6-parameter affine model. Therefore, a 4-parameter affine model can be derived by only using MV offsets from two sub-blocks (e.g., any two of the four available MV offsets in FIG. 7) and other remaining offsets for verification/evaluation purpose, if other offsets are available. In a 4-parameter affine model: $\begin{matrix}{a}_{xx} = {a}_{yy} \\ {a}_{xy} = - {a}_{yx}\end{matrix}$ (17)

For some sub-blocks such as those located at the left boundary or top boundary of the current CU, where there may be only one neighboring sub-blocks available, a 4-parameter affine model as defined above may be used to derive motion vector offset at each sample location.

In a fourth step, the luminance intensity change per pixel in a sub-block n of a CU is calculated by the optical flow equation: $Δ I \left(i, j\right) = {g}_{x} \left(i, j\right) ∗ Δ {v}_{x} \left(i, j\right) + {g}_{y} \left(i, j\right) ∗ Δ {v}_{y} \left(i, j\right)$ (18) where Δ*v*(*i, j*) and *g*(*i, j*) are the MV offset and spatial gradient, respectively, at each sample location (*i,j*), which were already calculated in previous steps.

Finally, the prediction for each reference picture list may be refined by adding the luminance intensity change. The final prediction *I*' is generated by the following equation. $I ′ \left(i, j\right) = I \left(i, j\right) + Δ I \left(i, j\right)$ (19)

Many implementation variations of the proposed MVRPROF method are possible, including the following.

In one alternate embodiment, when deriving the model parameters *aₓₓ, a_{xy}, a_{yx}, a_{yy}, bₓ* and *b_{y}* according to Eq. (15), the considered MV offsets may not be limited to only the four sub-blocks shown in FIG. 7, where only top-left, left, and above neighboring sub-blocks are considered. More candidate neighboring sub-blocks not far away from the current sub-block also may be considered. For example, MVPROF may use all sub-block MV offsets to derive one affine motion model for the CU, then apply the affine model to derive sample based MV offset for each sample.

Alternately, when deriving the model parameters according to Eq. (15) and evaluating model errors, a configurable or adaptive error threshold may be set to evaluate the model accuracy. In one example, multiple models, such as 6-parameter and 4-parameter models, may be evaluated and the model with the lowest L1 or L2 errors may be selected to derive Δ*v*(*i*, *j*) at each sample location, where L1 is the weighted sum of absolute difference (SAD) and L2 is the weighted sum of square difference (SSD).

In one exemplary implementation, when estimating model errors, a weighted L1 or L2 difference (e.g., MV offsets of different neighboring sub-blocks may have different weights) may be considered.

In another exemplary implementation, if only four MV offsets are used to derive the motion model, the model error may be evaluated before the model is derived to reduce the computational complexity (because the motion model estimation may be skipped if the model error is large). For example, the sum of two MV offsets in two diagonal directions may be calculated first, and the difference of the two sums may be used for the model error. For example, in FIG. 7, the sum of MV_{off}(x-1, y-1) and MV_{off}(x, y), and the sum of MV_{off}(x, y-1) and MV_{off}(x-1, y), may be calculated, respectively. The difference between these two sums may be used to represent the model error.

In yet another exemplary embodiment, when multiple neighboring MV offsets are used to calculate the model parameters, the sub-block aspect ratio may be kept as the same value of the current sub-block. Alternately, the different aspect ratios may be allowed.

In a further variation, when multiple neighboring MV offsets are used to calculate the model parameters, the neighboring sub-blocks' sizes may be the same as the current sub-block. Alternatively, neighboring sub blocks of different sizes may be allowed.

Furthermore, in the exemplary embodiments described hereinabove, the MVPPROF works in a way wherein each sub-block within the current CU derives model parameters independently, and each sample within the same sub-block shares the same model parameters, but each sample from different sub-blocks within the current CU may not share the model parameters. However, in another embodiment, the model parameters may be derived only once, and then all the samples within the current CU share the same parameters.

Yet further, in one variant of Eq. (19), the intensity difference derived from Eq. (18) may be multiplied by a weight factor w before it is added to the prediction, as shown in the below equation: $I ′ \left(i, j\right) = I \left(i, j\right) + w ⋅ Δ I \left(i, j\right)$ (20) where w is set to a value between 0 to 1 inclusive. The value *w* may be signaled at the CU level or the picture level. For example, w can be signaled by a weight index.

The MVRPROF technique may be used after DMVR based L0 prediction and L1 prediction are combined with weights. Alternatively, the MVRPROF technique may be applied to one prediction such as L0 or L1. For instance, in one embodiment, the MVRPROF technique may be applied to the one of L0 or L1 that is closer to the current picture in the time domain.

### Example Networks for Implementation of the Embodiments

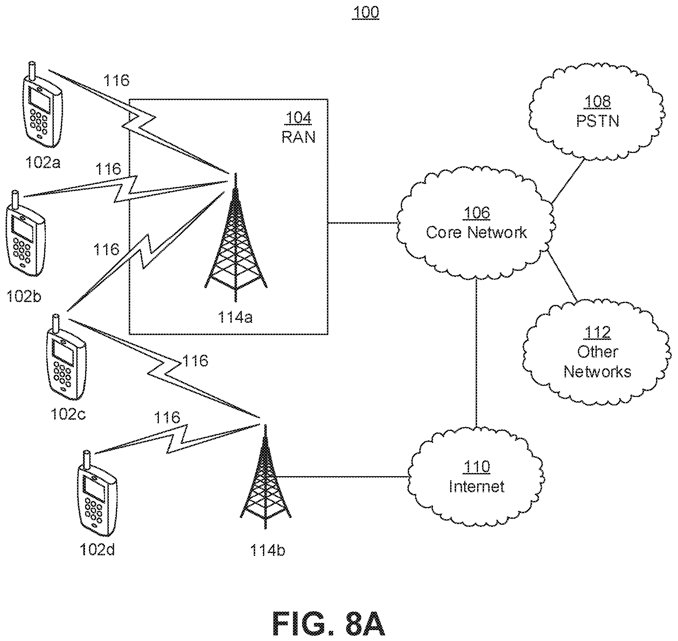

FIG. 8A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 8A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications system 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 8A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 8A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 8A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 8A may be configured to communicate with the base station 114a, which may employ a cellular-based radio technology, and with the base station 114b, which may employ an IEEE 802 radio technology.

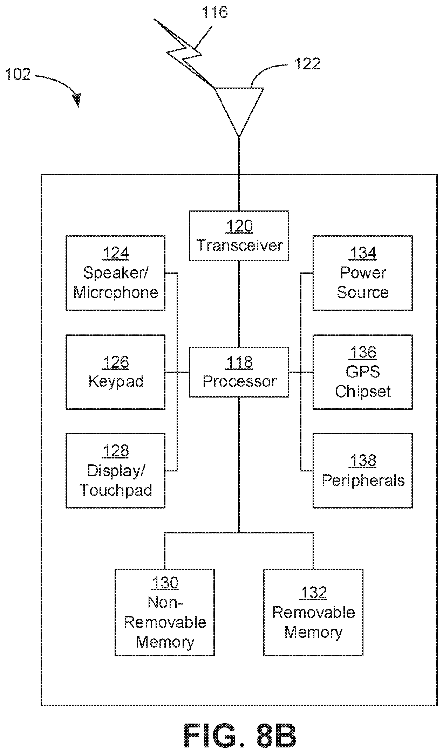

FIG. 8B is a system diagram illustrating an example WTRU 102. As shown in FIG. 8B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 8B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 8B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

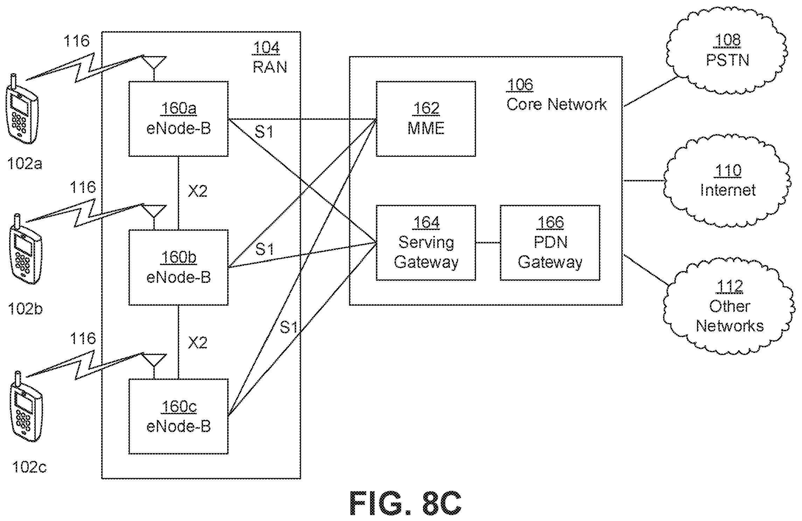

FIG. 8C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 8C, the eNode-Bs 160a, 160b, 160c may communicate with one another over an X2 interface.

The CN 106 shown in FIG. 8C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country.

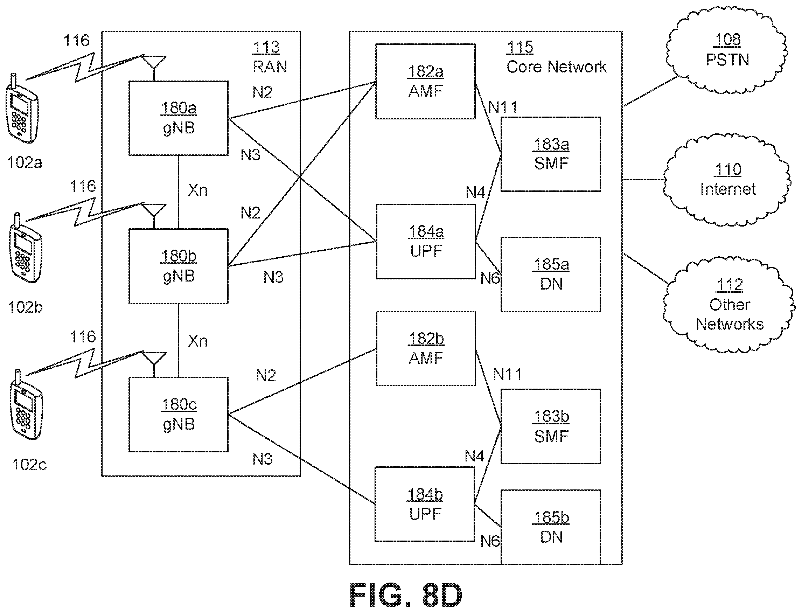

FIG. 8D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 8D, the gNBs 180a, 180b, 180c may communicate with one another over an Xn interface.

The CN 115 shown in FIG. 8D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized. For example, different network slices may be established for different use cases such as services relying on ultra-reliable low latency (URLLC) access, services relying on enhanced massive mobile broadband (eMBB) access, services for machine type communication (MTC) access, and/or the like. The AMF 182 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 8A-8D, and the corresponding description of Figures 8A-8D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

FIG. 9 is a system diagram illustrating a system implementing various aspects and operations according to embodiments.

Referring to FIG. 9, a system 1000 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High *Definition* Multimedia Interface (HDMI) input terminal. Other examples, not shown in FIG. 10, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, extracting a picture from a tiled (packed) picture, determining an upsample filter to use and then upsampling a picture, and flipping a picture back to its intended orientation.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art. Note that the syntax elements as used herein are descriptive terms, and the disclosure is not limited thereto. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments may include any of the following features, devices, or aspects, alone or in any combination, across various claim categories and types: (1) modifying prediction processes applied in the decoder and/or encoder; (2) enabling several advanced prediction methods in the decoder and/or encoder; (3) Inserting in the signalling syntax elements that enable the decoder to identify a prediction method to use; (4) selecting, based on these syntax elements, the prediction method to apply at the decoder; (5) applying the prediction method for deriving the prediction at the decoder; (6) adapting residues at an encoder according to any of the embodiments discussed; (7) a bitstream or signal that includes one or more of the described syntax elements, or variations thereof; (8) a bitstream or signal that includes syntax conveying information generated according to any of the embodiments described; (9) inserting in the signaling syntax elements that enable the decoder to adapt residues in a manner corresponding to that used by an encoder; (10) creating and/or transmitting and/or receiving and/or decoding a bitstream or signal that includes one or more of the described syntax elements, or variations thereof; (11) creating and/or transmitting and/or receiving and/or decoding according to any of the embodiments described; (12) a method, process, apparatus, medium storing instructions, medium storing data, or signal according to any of the embodiments described; (13) a TV, set-top box, cell phone, tablet, or other electronic device that performs adaptation of filter parameters according to any of the embodiments described; (14) a TV, set-top box, cell phone, tablet, or other electronic device that performs adaptation of filter parameters according to any of the embodiments described, and that displays (e.g. using a monitor, screen, or other type of display) a resulting image; (15) a TV, set-top box, cell phone, tablet, or other electronic device that selects (e.g. using a tuner) a channel to receive a signal including an encoded image, and performs adaptation of filter parameters according to any of the embodiments described; and (16) a TV, set-top box, cell phone, tablet, or other electronic device that receives (e.g. using an antenna) a signal over the air that includes an encoded image, and performs adaptation of filter parameters according to any of the embodiments described.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU 102, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed", "computer executed", or "CPU executed".

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the exemplary embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost vs. efficiency tradeoffs. There may be various vehicles by which processes and/or systems and/or other technologies described herein may be affected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

It is also to be understood that the terminology used herein is for the purpose of describing particular embodiments only, and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B". Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to", "at least", "greater than", "less than", and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112(f)or means-plus-function claim format, and any claim without the terms "means for" is not so intended.

Although the invention is illustrated and described herein with reference to specific embodiments, the invention is not intended to be limited to the details shown. Rather, various modifications may be made in the details within the scope and range of equivalents of the claims and without departing from the invention.

Throughout the disclosure, one of skill understands that certain representative embodiments may be used in the alternative or in combination with other representative embodiments.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WRTU, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed", "computer executed", or "CPU executed".

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits.

The data bits may also be maintained on a computer readable medium including magnetic disks, optical disks, and any other volatile (e.g., Random Access Memory ("RAM")) or non-volatile ("e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

No element, act, or instruction used in the description of the present application should be construed as critical or essential to the invention unless explicitly described as such. In addition, as used herein, the article "a" is intended to include one or more items. Where only one item is intended, the term "one" or similar language is used. Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Further, as used herein, the term "set" is intended to include any number of items, including zero. Further, as used herein, the term "number" is intended to include any number, including zero.

Moreover, the claims should not be read as limited to the described order or elements unless stated to that effect. In addition, use of the term "means" in any claim is intended to invoke 35 U.S.C. §112(f), and any claim without the word "means" is not so intended.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

A processor in association with software may be used to implement a radio frequency transceiver for use in a wireless transmit receive unit (WRTU), user equipment (UE), terminal, base station, Mobility Management Entity (MME) or Evolved Packet Core (EPC), or any host computer. The WRTU may be used m conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope and range of equivalents of the claims and without departing from the invention.

## Claims

1. A method of video processing, comprising:
receiving a block of video data, wherein the block of video data includes a plurality of sub-blocks, SBs;
for each sub-block, of the plurality of SBs, deriving a respective refined motion vector by a decoder-side motion vector refinement, DMVR, process, wherein a respective refinement offset is derived that represents the offset between a respective initial motion vector and the respective refined motion vector;
applying motion compensation to generate respective sub-block predictions, for the plurality of SBs, based on their respective refined motion vectors; and
for a sub-block of the plurality of SBs,
calculating, for each pixel (i,j) of the sub-block prediction of the sub-block, respective spatial gradients gₓ(i,j) and g_{y}(i,j) by applying a 3-tap filter [-1, 0, 1];
computing parameters aₓₓ, a_{xy}, a_{yx}, a_{yy}, bₓ, b_{y} of a 6-parameter affine motion model by performing a linear regression based on refinement offsets and center locations of the sub-block and three neighboring sub-blocks;
calculating the motion vector offset **Δv (i,j)** for each pixel using the computed parameters of the affine motion model and a coordinate of the pixel according to Δvₓ(i,j)= aₓₓi+ a_{xy}j+bₓ and Δv_{y}(i,j)= a_{yx}i+ a_{yy}j+b_{y};
obtaining, an intensity change ΔI(i,j) for each pixel by applying an optical flow equation that combines the calculated spatial gradients with the calculated motion vector offset for the respective pixel according to the equation ΔI(i,j)= gₓ(i,j)* Δvₓ(i,j) + g_{y}(i,j)* Δv_{y}(i,j), and
refining the sub-block prediction by respectively adding the obtained intensity change to each corresponding pixel.

2. The method of claim 1, wherein the affine motion model computed for the sub-block is used for refining a prediction of another sub-block of the video block.

3. The method of claim 1, wherein the affine motion model is a four-parameter affine motion model for one or more SBs of the plurality of SBs.

4. The method of claim 3, wherein the one or more SBs are located at a left boundary and/or a top boundary of the block of video data.

5. The method of claim 1, wherein the refining the pixels based on the obtained intensity changes comprises:
weighting the obtained intensity change by a weighting factor, and
adding the weighted intensity change to the pixels.

6. The method of claim 5, further comprising:
receiving a weight index indicating, at the video block level or at a picture level, the weighting factor for weighting the obtained intensity changes.

7. An apparatus comprising any of a transmitter, a receiver, a processor, and memory for video processing, the apparatus configured to perform the method of any one of claims 1 to 6.

8. A decoder or an encoder of an apparatus comprising any of a transmitter, a receiver, a processor, and memory for video processing, the decoder or the encoder configured to perform the method of any one of claims 1 to 6.

9. A computer-readable medium comprising instructions for performing the method of any one of claims 1 to 6.

## Patentansprüche

1. Verfahren zum Videoverarbeiten, aufweisend:
Empfangen eines Blocks von Videodaten, wobei der Block von Videodaten mehrere Teilblöcke, SBs, einschließt;
für jeden Teilblock der mehreren SBs, Ableiten eines jeweiligen verfeinerten Bewegungsvektors durch einen decodiererseitigen Bewegungsvektorverfeinerungsprozess, DMVR-Prozess, wobei ein jeweiliger Verfeinerungsversatz abgeleitet wird, der den Versatz zwischen einem jeweiligen anfänglichen Bewegungsvektor und dem jeweiligen verfeinerten Bewegungsvektor darstellt;
Anwenden von Bewegungskompensation, um jeweilige Teilblockvorhersagen für die mehreren SBs basierend auf ihren jeweiligen verfeinerten Bewegungsvektoren zu erzeugen; und
für einen Teilblock der mehreren SBs,
Errechnen, für jedes Pixel (i,j) der Teilblockvorhersage des Teilblocks, von jeweiligen räumlichen Gradienten gₓ(i,j) und g_{y}(i,j) durch Anwenden eines 3-Tap-Filters [-1, 0, 1];
Berechnen von Parametern aₓₓ, a_{xy}, a_{yx}, a_{yy}, bₓ, b_{y} eines affinen 6-Parameter-Bewegungsmodells durch Durchführen einer linearen Regression basierend auf Verfeinerungsversätzen und Mittelpunktpositionen des Teilblocks und dreier benachbarter Teilblöcke;
Errechnen des Bewegungsvektorversatzes **Δv (i,j)** für jedes Pixel unter Verwendung der berechneten Parameter des affinen Bewegungsmodells und einer Koordinate des Pixels gemäß Δvₓ(i,j)=aₓₓi+ a_{xy}j+bₓ und Δv_{y}(i,j)= a_{yx}i+ a_{yy}j+b_{y};
Erhalten einer Intensitätsänderung ΔI(i,j) für jedes Pixel durch Anwenden einer optischen Flussgleichung, die die errechneten räumlichen Gradienten mit dem errechneten Bewegungsvektorversatz für das jeweilige Pixel gemäß der Gleichung ΔI(i,j)= gₓ(i,j)* Δvₓ(i,j) + g_{y}(i,j)* Δv_{y}(i,j) kombiniert, und
Verfeinern der Teilblockvorhersage durch jeweiliges Addieren der erhaltenen Intensitätsänderung zu jedem entsprechenden Pixel.

2. Verfahren nach Anspruch 1, wobei das affine Bewegungsmodell, das für den Teilblock berechnet wird, zum Verfeinern einer Vorhersage eines anderen Teilblocks des Videoblocks verwendet wird.

3. Verfahren nach Anspruch 1, wobei das affine Bewegungsmodell ein vierparametriges affines Bewegungsmodell für einen oder mehrere SBs der mehreren SBs ist.

4. Verfahren nach Anspruch 3, wobei der eine oder die mehreren SBs an einem linken Rand und/oder einem oberen Rand des Blocks von Videodaten positioniert sind.

5. Verfahren nach Anspruch 1, wobei das Verfeinern der Pixel basierend auf den erhaltenen Intensitätsänderungen umfasst:
Gewichten der erhaltenen Intensitätsänderung mit einem Gewichtungsfaktor, und
Addieren der gewichteten Intensitätsänderung zu den PixeIn.

6. Verfahren nach Anspruch 5, ferner aufweisend:
Empfangen eines Gewichtsindex, der auf der Videoblockebene oder auf einer Bildebene den Gewichtungsfaktor zum Gewichten der erhaltenen Intensitätsänderungen angibt.

7. Vorrichtung, aufweisend ein beliebiges von einem Sender, einem Empfänger, einem Prozessor und einem Speicher zum Videoverarbeiten, wobei die Vorrichtung konfiguriert ist, um das Verfahren nach einem der Ansprüche 1 bis 6 durchzuführen.

8. Decodierer oder Codierer einer Vorrichtung, aufweisend ein beliebiges von einem Sender, einem Empfänger, einem Prozessor und einem Speicher zum Videoverarbeiten, wobei der Decodierer oder der Codierer konfiguriert ist, um das Verfahren nach einem der Ansprüche 1 bis 6 durchzuführen.

9. Computerlesbares Medium, aufweisend Anweisungen zum Durchführen des Verfahrens nach einem der Ansprüche 1 bis 6.

## Revendications

1. Procédé de traitement vidéo, comprenant :
la réception d'un bloc de données vidéo, dans lequel le bloc de données vidéo comporte une pluralité de sous-blocs, SB ;
pour chaque sous-bloc, de la pluralité de SB, la dérivation d'un vecteur de mouvement affiné respectif par un processus d'affinement de vecteur de mouvement côté décodeur, DMVR, dans lequel un décalage d'affinement respectif est dérivé qui représente le décalage entre un vecteur de mouvement initial respectif et le vecteur de mouvement affiné respectif ;
l'application d'une compensation de mouvement pour générer des prédictions de sous-blocs respectives, pour la pluralité de SB, sur la base de leurs vecteurs de mouvement affinés respectifs ; et
pour un sous-bloc de la pluralité de SB,
le calcul, pour chaque pixel (i,j) de la prédiction de sous-bloc du sous-bloc, de gradients spatiaux respectifs gₓ(i,j) et g_{y}(i,j) en appliquant un filtre à 3 coefficients [-1, 0, 1] ;
le calcul de paramètres aₓₓ, a_{xy}, a_{yx}, a_{yy}, bₓ, b_{y} d'un modèle de mouvement affine à 6 paramètres en réalisant une régression linéaire sur la base de décalages d'affinement et d'emplacements de centre du sous-bloc et de trois sous-blocs voisins ;
le calcul du décalage de vecteur de mouvement **Δv (i,j)** pour chaque pixel à l'aide des paramètres calculés du modèle de mouvement affine et d'une coordonnée du pixel selon Δvₓ(i,j) = aₓₓi + a_{xy}j + bₓ et Δv_{y}(i,j) = a_{yx}i + a_{yy}j + b_{y} ;
l'obtention, d'une variation d'intensité ΔI(i,j) pour chaque pixel en appliquant une équation de flux optique qui combine les gradients spatiaux calculés avec le décalage de vecteur de mouvement calculé pour le pixel respectif selon l'équation ΔI(i,j) = gₓ(i,j) * Δvₓ(i,j) + g_{y}(i,j) * Δv_{y}(i,j), et
l'affinement de la prédiction de sous-bloc en ajoutant respectivement la variation d'intensité obtenue à chaque pixel correspondant.

2. Procédé selon la revendication 1, dans lequel le modèle de mouvement affine calculé pour le sous-bloc est utilisé pour affiner une prédiction d'un autre sous-bloc du bloc vidéo.

3. Procédé selon la revendication 1, dans lequel le modèle de mouvement affine est un modèle de mouvement affine à quatre paramètres pour un ou plusieurs SB de la pluralité de SB.

4. Procédé selon la revendication 3, dans lequel le ou les SB sont situés au niveau d'une limite gauche et/ou d'une limite supérieure du bloc de données vidéo.

5. Procédé selon la revendication 1, dans lequel l'affinement des pixels sur la base des variations d'intensité obtenues comprend :
la pondération de la variation d'intensité obtenue par un facteur de pondération, et
l'ajout de la variation d'intensité pondérée aux pixels.

6. Procédé selon la revendication 5, comprenant en outre :
la réception d'un indice de pondération indiquant, au niveau du bloc vidéo ou au niveau d'une image, le facteur de pondération pour pondérer les variations d'intensité obtenues.

7. Appareil comprenant l'un quelconque parmi un émetteur, un récepteur, un processeur et une mémoire pour un traitement vidéo, l'appareil étant configuré pour réaliser le procédé selon l'une quelconque des revendications 1 à 6.

8. Décodeur ou encodeur d'un appareil comprenant l'un quelconque parmi un émetteur, un récepteur, un processeur et une mémoire pour un traitement vidéo, le décodeur ou l'encodeur étant configuré pour réaliser le procédé selon l'une quelconque des revendications 1 à 6.

9. Support lisible par ordinateur comprenant des instructions pour réaliser le procédé selon l'une quelconque des revendications 1 à 6.
